# EUROPEAN PATENT APPLICATION

(11) **EP 4 246 610 A1**
(43) Date of publication of application: **20.09.2023**
(21) Application number: 22882538.6
(22) Date of filing: 20.09.2022
(51) Int. Cl.: H01M 4/13

(54) **POLE PIECE, ASSEMBLY, CELL, BATTERY, DEVICE, AND POLE PIECE MANUFACTURING METHOD AND SYSTEM**

(30) Priority: 18.10.2021 CN 202111212279
(71) Applicant: Contemporary Amperex Technology Co., Limited, Ningde, Fujian 352100 (CN)
(72) Inventor: YANG, Hongfeng, Ningde, Fujian 352100 (CN); FAN, Yanhuang, Ningde, Fujian 352100 (CN); ZHANG, Lei, Ningde, Fujian 352100 (CN)
(74) Representative: Rowlands, Stuart Michael
(86) International application number: PCT/CN2022/119937
(87) International publication number: WO 2023/065927

(57) **Abstract**

The present application provides a pole piece, an assembly, a cell, a battery, an electronic device, and a pole piece manufacturing method and system. The pole piece comprises: a current collector; a diaphragm layer, which comprises an active substance; and an insulating protective layer, which covers the diaphragm layer. The insulating protective layer comprises a hole for ion migration in the active substance and for preventing the active substance from separating.

## Description

### CROSS-REFERENCES TO RELATED APPLICATIONS

The present application claims priority to Chinese Patent Application 202111212279.6, filed on October 18, 2021 and entitled "ELECTRODE SHEET, ASSEMBLY, CELL, BATTERY, DEVICE, METHOD AND SYSTEM FOR PRODUCING ELECTRODE SHEET", the entire content of which is incorporated herein by reference.

### TECHNICAL FIELD

The present application relates to the field of battery technologies, and in particular, to an electrode sheet, an assembly, a cell, a battery, a power consumption device, a method and a system for producing the electrode sheet.

### BACKGROUND

In recent years, with the wider application of lithium-ion batteries, the lithium-ion batteries are widely applied to energy storage power systems, such as hydraulic, thermal, wind and solar power stations, as well as many fields such as electrical tools, military equipment and aerospace. Due to the great development of the lithium-ion batteries, higher requirements are put forward for their energy density, cycle performance, safety performance, and the like. A membrane layer composed of an active substance on a surface of an electrode sheet is easy to be contaminated, which will lead to risks of battery insulation failure and self-discharge. Moreover, in the process of producing the electrode sheet, a diameter of a metal particle and other dust is smaller and it is difficult to clean; and even if the cleaning is complete, there are still problems of complex cleaning system structure and high cleaning cost.

### SUMMARY

The present application provides an electrode sheet, an assembly, a cell, a battery, a power consumption device, a method and a system for producing the electrode sheet, which may at least partially reduce the contamination degree of a membrane layer of the electrode sheet and the problem of high production cost caused by cleaning.

In order to achieve the above purpose, a first aspect of the present application provides an electrode sheet, including:
a current collector;
a membrane layer, including an active substance; and
an insulating protective layer, the insulating protective layer covering on the membrane layer, where the insulating protective layer includes a hole for ion migration in the active substance and preventing a separation of the active substance.

In the electrode sheet provided by an embodiment of the present application, an insulating protective layer covers on the membrane layer. By the insulating protective layer, on the one hand, it may prevent drops of a particle of the active substance of the membrane layer and a metal grit doped in the active substance, and on the other hand, the insulating protective layer has a hole for an ion to pass through, so that a battery composed of the electrode sheet may complete the normal function of charging and discharging. Since the insulating protective layer covers on the membrane, it has a smoother outer surface than the membrane layer formed by compacting, when a dust particle falls into a surface of the insulating protective layer, it may be easier to clean and may be cleaner, and it has a lower requirement on a structure and complexity of a cleaning system, thereby reducing the cleaning cost. Moreover, an insulation of the insulating protective layer will make it not directly contact with the membrane layer even if a small amount of metal dust is not cleaned, thereby reducing risks of battery insulation failure and self-discharge caused by conductive dust such as metal dust.

On the basis of the above solution, the insulating protective layer contains a polymer.

In an embodiment of the present application, the insulating protective layer contains a polymer, and the polymer has sufficient strength, and may be pressed onto the membrane layer at a relatively thin thickness.

On the basis of the above solution, an aperture of the hole is between 0.05µm and 8µm. On the one hand, providing the aperture of the hole on the insulating protective layer within this range may make a grit used in the charging and discharging of lithium ion or sodium ion battery migrate smoothly, and on the other hand, it may well bind the particle of the active substance, thereby reducing a separation of a particle of the active substance.

On the basis of the above solution, a thickness of the insulating protective layer is between 1µm and 10µm.

On the one hand, providing the thickness of the insulating protective layer within this range may have sufficient strength to prevent the separation of the particle of the active substance, and on the other hand, the thickness may make the protective film be pressed onto the membrane layer in a broken or tom state as little as possible.

On the basis of the above solution, the membrane layer includes: a first membrane layer and a second membrane layer; the first membrane layer and the second membrane layer are located on opposite sides of the current collector;
the insulating protective layer includes:
a first insulating protective layer covering the first membrane layer; and
a second insulating protective layer covering the second membrane layer.

This is for the electrode sheet with the membrane layer on upper and lower surfaces of the current collector, the first insulating protective layer is provided on the first membrane layer of the electrode sheet, and the second insulating protective layer is provided on the second membrane layer of the electrode sheet. Therefore, for upper and lower membrane layers of the electrode sheet with large charging and discharging capacity, it may protect the electrode sheet more comprehensively than the electrode sheet provided with the insulating protective layer.

A second aspect of the present application provides an electrode assembly, including:
the electrode sheet as provided by any of the above technical solutions.

The electrode sheet contained in the electrode assembly is the preceding electrode sheet containing an insulating protective layer, so similarly, by the insulating protective layer, on the one hand, it may prevent drops of a particle of the active substance of the membrane layer and a metal grit doped in the active substance, and on the other hand, the insulating protective layer has a hole for an ion to pass through, so that a battery composed of the electrode sheet may complete the normal function of charging and discharging. Since the insulating protective layer covers on the membrane, it has a smoother outer surface than the membrane layer formed by compacting, when a dust particle falls into a surface of the insulating protective layer, it may be easier to clean and may be cleaner, and it has a lower requirement on a structure and complexity of a cleaning system, thereby reducing the cleaning cost. Moreover, an insulation of the insulating protective layer will make it not directly contact with the membrane layer even if a small amount of metal dust is not cleaned, thereby reducing risks of battery insulation failure and self-discharge caused by conductive dust such as metal dust.

In an embodiment, the electrode assembly includes:
a positive electrode sheet;
a negative electrode sheet; and
a separator layer, the separator layer being located between the positive electrode sheet and the negative electrode sheet.

At least one of the positive electrode sheet and negative electrode sheet of the electrode assembly in an embodiment of the present application is a membrane containing the insulating protective layer, and an separating electron is provided between the positive electrode sheet and the negative electrode sheet traversing the separator layer, thereby completing the function of the battery on the basis of introducing the insulating protective layer on the electrode sheet.

A third aspect of the present application provides a battery cell, including:
a housing having an accommodating cavity; and
the electrode assembly provided by any of the preceding technical solutions, and the electrode assembly being located in the accommodating cavity.

The battery cell contains the electrode assembly, and at least one of the positive electrode sheet and negative electrode sheet in the electrode assembly is an electrode sheet containing the insulating protective layer, so similarly, by the insulating protective layer, on the one hand, it may prevent drops of a particle of the active substance of the membrane layer and a metal grit doped in the active substance, and on the other hand, the insulating protective layer has a hole for an ion to pass through, so that a battery composed of the electrode sheet may complete the normal function of charging and discharging. Since the insulating protective layer covers on the membrane, it has a smoother outer surface than the membrane layer formed by compacting, when a dust particle falls into a surface of the insulating protective layer, it may be easier to clean and may be cleaner, and it has a lower requirement on a structure and complexity of a cleaning system, thereby reducing the cleaning cost. Moreover, an insulation of the insulating protective layer will make it not directly contact with the membrane layer even if a small amount of metal dust is not cleaned, thereby reducing risks of battery insulation failure and self-discharge caused by conductive dust such as metal dust.

A fourth aspect of the present application provides a battery, including:
a box body; and
the battery cell provided by the preceding embodiments, and the battery cell being accommodated in the box body.

The battery includes the battery cell provided by the preceding embodiments, and at least one of the positive electrode sheet and negative electrode sheet in the electrode assembly of the battery cell is an electrode sheet containing the insulating protective layer, so similarly, by the insulating protective layer, on the one hand, it may prevent drops of a particle of the active substance of the membrane layer and a metal grit doped in the active substance, and on the other hand, the insulating protective layer has a hole for an ion to pass through, so that a battery composed of the electrode sheet may complete the normal function of charging and discharging. Since the insulating protective layer covers on the membrane, it has a smoother outer surface than the membrane layer formed by compacting, when a dust particle falls into a surface of the insulating protective layer, it may be easier to clean and may be cleaner, and it has a lower requirement on a structure and complexity of a cleaning system, thereby reducing the cleaning cost. Moreover, an insulation of the insulating protective layer will make it not directly contact with the membrane layer even if a small amount of metal dust is not cleaned, thereby reducing risks of battery insulation failure and self-discharge caused by conductive dust such as metal dust.

A fifth aspect of the present application provides a power consumption device, including:
the battery provided by the preceding technical solutions; and
a power consuming assembly, the power consuming assembly being electrically coupled to the battery.

At least one of the positive electrode sheet and negative electrode sheet contained in the battery of the power consumption device has an insulating protective layer, thereby having a characteristic of a low probability of battery self-failure and a low risk of self-discharge caused by dust contamination.

A sixth aspect of the present application provides a method for producing an electrode sheet, including:
coating a current collector with an active substance;
pressing the active substance to form a membrane layer, and forming an insulating protective layer on the membrane layer, where the insulating protective layer has a hole for ion migration in the active substance and preventing a separation of the active substance.

The insulating protective layer is introduced into the electrode sheet by adopting the method for producing the electrode sheet provided by an embodiment of the present application. On the one hand, the insulating protective layer may prevent drop of a particle of the active substance of the membrane layer, and on the other hand, the insulating protective layer has a hole for an ion to pass through, so that a battery composed of the electrode sheet may complete the normal function of charging and discharging. Since the insulating protective layer covers on the membrane, it has a smoother outer surface than the membrane layer formed by compacting, when a dust particle falls into a surface of the insulating protective layer, it may be easier to clean and may be cleaner, and it has a lower requirement on a structure and complexity of a cleaning system, thereby reducing the cleaning cost. Moreover, an insulation of the insulating protective layer will make it not directly contact with the membrane layer even if a small amount of metal dust is not cleaned, thereby reducing risks of battery insulation failure and self-discharge caused by conductive dust such as metal dust.

In an embodiment, the pressing the active substance to form a membrane layer, and forming an insulating protective layer on the membrane layer includes:
placing the current collector coated with the active substance between protective films, and pressing the protective films and the active substance to synchronously form the membrane layer and the insulating protective layer.

The membrane layer and the insulating protective layer are formed simultaneously by once pressing, which has a characteristic that the manufacturing process is simple and ingenious.

In an embodiment, the placing the current collector coated with the active substance between protective films, and pressing the protective films and the active substance to synchronously form the membrane layer and the insulating protective layer includes:
transmitting the current collector coated with the active substance from a first position to a second position by a transmission apparatus;
releasing a protective film from the first position to the second position by a protective film apparatus; and
pressing the protective film and the active substance successively from top to bottom by a pressing apparatus to form the membrane layer and the insulating protective layer covering on the membrane layer.

The protective film of the insulating protective layer may be pressed by rotation of an unwinding roller, and the film layer and the insulating protective layer may be simultaneously completed by passing through pressing roller once.

In an embodiment, both a first surface and a second surface of the current collector are coated with the active substance;

the transmission apparatus includes: a first cross roller and a second cross roller, the first cross roller provides the current collector coated with the active substance moving from the first position to the second position, and the second cross roller provides a force to push the current collector coated with the active substance to move from the first position to the second position.

The current collector coated with the active substance is transferred by the cross roller, and it has a characteristic that a structure of the transmission apparatus is simple and the transmission is smooth.

In an embodiment,
the pressing apparatus includes: a first pressing roller and a second pressing roller; the second pressing roller is located below the first pressing roller and has a gap with the first pressing roller; and
the current collector coated with the active substance passes through the gap between the first pressing roller and the second pressing roller under a traction of the first pressing roller and a push of the second pressing roller.

A pressing of the membrane layer and the insulating protective layer may be realized simply by the pressing roller.

The protective film apparatus includes: a first unwinding mechanism and a second unwinding mechanism; the first unwinding mechanism is located above the first cross roller and the second cross roller, and the second unwinding mechanism is located below the first cross roller and the second cross roller;
the first unwinding mechanism is used for unwinding a first protective film of a first membrane layer formed by an active substance covering a first surface of the current collector; and the first protective film passes between the current collector coated with the active substance and the first pressing roller and is pressed; and
the second unwinding mechanism is used for unwinding a second protective film of a second membrane layer formed by an active substance covering a second surface of the current collector; and the second protective film passes between the current collector coated with the active substance and the second pressing roller and is pressed.

An unwinding of the protective film may be realized simply by the unwinding roller.

In an embodiment, the method further includes:
cutting the current collector formed by pressing and having the insulating protective layer and the membrane layer to obtain the electrode sheet; and
cleaning a surface of the insulating protective layer by negative pressure during cutting.

When cutting, time for producing the electrode sheet may be shorten by negative pressure cleaning.

A seventh aspect of the present application provides a system for producing an electrode sheet, including:
a transmission apparatus, the transmission apparatus being used for moving a current collector coated with an active substance from a first position to a second position;
a protective film apparatus, the protective film apparatus being used for unwinding a protective film forming an insulating protective layer;
a pressing apparatus, the protective film apparatus being used for pressing the protective film and the active substance from top to bottom to form a membrane layer and an insulating protective layer covering on the membrane layer respectively; and where the insulating protective layer has a hole for ion migration in the active substance and preventing a separation of the active substance.

The producing system may be used for simply producing the preceding electrode sheet with the insulating protective layer, and a battery assembled by the electrode sheet produced in this way has a characteristic of a low risk of battery insulation failure and self-discharge, and has a characteristic of low cleaning cost.

In an embodiment, both a first surface and a second surface of the current collector are coated with the active substance;
the transmission apparatus includes: a first cross roller and a second cross roller, the first cross roller provides the current collector coated with the active substance moving from the first position to the second position, and the second cross roller provides a force to push the current collector coated with the active substance to move from the first position to the second position.

The current collector coated with the active substance is transferred by the cross roller, and it has a characteristic that a structure of the transmission apparatus is simple and the transmission is smooth.

On the basis of the above solution, the pressing apparatus includes: a first pressing roller and a second pressing roller; the second pressing roller is located below the first pressing roller and has a gap with the first pressing roller; and
the current collector coated with the active substance passes through the gap between the first pressing roller and the second pressing roller under a traction of the first pressing roller and a push of the second pressing roller.

A pressing of the membrane layer and the insulating protective layer may be realized simply by the pressing roller.

On the basis of the above solution, the protective film apparatus includes: a first unwinding mechanism and a second unwinding mechanism; the first unwinding mechanism is located above the first cross roller and the second cross roller, and the second unwinding mechanism is located below the first cross roller and the second cross roller;
the first unwinding mechanism is used for unwinding a first protective film of a first membrane layer formed by an active substance covering a first surface of the current collector; and the first protective film passes between the current collector coated with the active substance and the first pressing roller and is pressed; and
the second unwinding mechanism is used for unwinding a second protective film of a second membrane layer formed by an active substance covering a second surface of the current collector; and the second protective film passes between the current collector coated with the active substance and the second pressing roller and is pressed.

An unwinding of the protective film may be realized simply by the unwinding roller.

On the basis of the above solution, the system further includes:
a separator plate, the separator plate is located between the second unwinding mechanism and the first cross roller, and is used for preventing a protective film on the second unwinding mechanism from contamination.

The separator plate is provided between the second unwinding mechanism and the first cross roller, and contaminants on the protective film located below may be shielded by the separator plate, so as to maintain the cleanliness of the protective film itself on the second unwinding mechanism.

On the basis of the above solution, the system further includes:
a cutting apparatus, the cutting apparatus is used for cutting the current collector formed by pressing and having the insulating protective layer and the membrane layer to obtain the electrode sheet; and
a dust suction apparatus, the dust suction apparatus is used for generating negative pressure absorbing dust on the insulating protective layer when the cutting apparatus is cutting.

By the introduction of the dust suction apparatus, dust suction is carried out synchronously based on the negative pressure during cutting, thereby time for producing the electrode sheet may be shorten.

### BRIEF DESCRIPTION OF DRAWINGS

FIG. 1 is a schematic structural diagram of an electrode sheet provided by an embodiment of the present application.
FIG. 2 is a schematic structural diagram of an electrode sheet provided by an embodiment of the present application.
FIG. 3 is a schematic structural diagram of an electrode sheet assembly provided by an embodiment of the present application.
FIG. 4 is a schematic structural diagram of a battery cell provided by an embodiment of the present application.
FIG. 5 is a schematic diagram of a battery cell provided by an embodiment of the present application.
FIG. 6 is a schematic structural diagram of a power consumption device provided by an embodiment of the present application.
FIG. 7 is a schematic flowchart of a method for producing an electrode sheet provided by an embodiment of the present application.
FIG. 8 is a schematic flowchart of forming a membrane layer and an insulating protective layer provided by an embodiment of the present application.
FIG. 9 is a schematic structural diagram of a system for producing an electrode sheet provided by an embodiment of the present application.

### DESCRIPTION OF EMBODIMENTS

Hereinafter, embodiments that specifically disclose an electrode sheet structure, a negative electrode sheet, an electrode assembly, a battery cell and a power consumption device of the present application may be described in detail with reference to the accompanying drawings as appropriate. However, unnecessarily detailed descriptions may be omitted in some cases. For example, detailed descriptions of well-known matters and repeated descriptions of practically identical structures are omitted. This is done to avoid unnecessarily redundant descriptions for ease of understanding by persons skilled in the art. In addition, the drawings and the following description are provided for a full understanding of the present application by those skilled in the art, and are not intended to limit the subject matter recorded in the claims.

A "range" disclosed in the present application is defined in the form of a lower limit and an upper limit. A given range is defined by selecting a lower limit and an upper limit, and the selected lower limit and upper limit define a boundary of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are further contemplated. In addition, if the minimum range values listed are 1 and 2, and the maximum range values listed are 3, 4 and 5, all the following ranges are contemplated: 1-3, 1-4, 1-5, 2-3, 2-4, and 2-5. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application may be combined with each other to form a new technical solution.

Unless otherwise specified, all technical features and optional technical features of the present application may be combined with each other to form a new technical solution.

Unless otherwise specified, "comprising" and "containing" mentioned in the present application are open-ended or closed-ended. For example, the "comprising" and "containing" may mean that other components that are not listed may further be comprised or contained, or only listed components may be comprised or contained.

In the present application, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

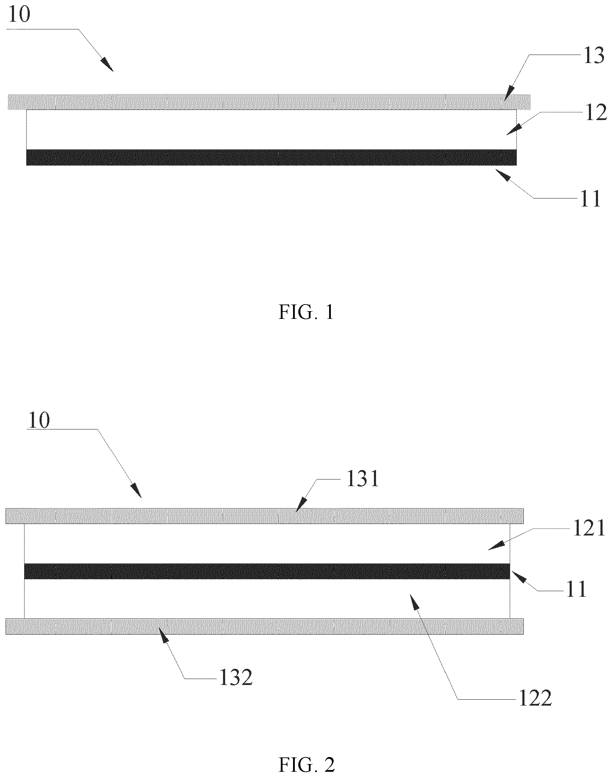

As shown in FIG. 1, an embodiment of the present application provides an electrode sheet 10, including:
a current collector 11;
a membrane layer 12, including an active substance; and
an insulating protective layer 13, the insulating protective layer 13 covering on the membrane layer 12, where the insulating protective layer 13 includes a hole for ion migration in the active substance and preventing a separation of the active substance.

The current collector 11 may be a metal sheet, and the metal sheet includes but is not limited to an aluminum sheet.

The current collector 11 includes a part covered by the membrane layer 12 and a part not covered by the membrane layer 12, and the part not covered by the membrane layer 12 may form a tab.

The electrode sheet 10 in an embodiment of the present disclosure includes: a positive electrode sheet and/or a negative electrode sheet. If the electrode sheet 10 is a positive electrode sheet, the active substance forming the membrane layer 12 is a positive active substance; and if the electrode sheet 10 is a negative electrode sheet, the active substance forming the membrane layer 12 is a negative active substance.

The positive electrode active substance may include at least one of the following substances: lithium-containing phosphate of the olivine structure, a lithium transition metal oxide, and their respective modified compounds. However, the present application is not limited to these materials, and other conventional materials that may be used as the positive electrode active material for the battery may also be used. These positive active materials may be used alone, or two or more types may be used in combination. Where examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂, LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (or referred to as NCM₃₃₃ for short), LiNi_{0.5}Co_{0.2}Mn_{0.3}O₂ (or referred to as NCM₅₂₃ for short), LiNi_{0.5}Co_{0.25}Mn_{0.25}O₂ (or referred to as NCM₂₁₁ for short), LiNi_{0.6}Co_{0.2}Mn_{0.2}O₂ (or referred to as NCM₆₂₂ for short), LiNi_{0.8}Co_{0.1}Mn_{0.1}O₂ (or referred to as NCMsn for short), a lithium nickel cobalt aluminum oxide (such as LiNi_{0.85}Co_{0.15}Al_{0.05}O₂), their modified compounds, and the like. Examples of the lithium-containing phosphate of the olivine structure may include, but are not limited to, at least one of lithium iron phosphate (such as LiFePO₄ (or referred to as LFP for short)), a composite of lithium iron phosphate and carbon, lithium manganese phosphate (such as LiMnPO₄), a composite of lithium manganese phosphate and carbon, lithium manganese iron phosphate, and a composite of lithium manganese iron phosphate and carbon.

For the negative electrode sheet, both a first type of active substance and a second type of active substance are negative active substances.

A negative active substance may include carbon or silicon.

In an embodiment of the present disclosure, the electrode sheet further includes: an insulating protective layer 13, the insulating protective layer covering on the membrane layer 12, the insulating protective layer 13 is composed of an insulating substance, that is, when covering on the membrane layer 12, it may perform certain function of insulation on the membrane layer 12. Since the insulating protective layer 13 covers on the membrane layer 12, it also separates a risk of battery insulation failure or self-discharge caused by dust that is difficult to clean directly contacting with the membrane layer 12.

Moreover, the insulating protective layer 13 is a thin film or a formed film directly laying on the membrane layer 12, and after laying on the membrane layer 12, it will be a component part of the electrode sheet and will not be separated from the electrode sheet.

In an embodiment of the present application, the insulating protective layer 13 has a micron-sized hole, which may be provided for an ion to pass through when the active substance is discharged or energized. The ion may include: a lithium ion or a sodium ion, so that the normal operation of the battery may be completed after the electrode sheet is assembled into a battery.

The insulating protective layer 13 is formed by pressing a protective film with a smooth surface, and after the protective film being pressed onto the membrane layer 12, it still has a smoother outer surface than a surface of the membrane layer 12. Therefore, it is easier to clean the dust falling on a surface of the insulating protective layer 13.

At the same time, being pressed on the membrane layer 12 composed of the active substance may bind the active substance and prevent drop of the active substance.

In one embodiment, the insulating protective layer 13 may include an insulating polymer. The insulating polymer has an insulating property, the insulating polymer is used, and the polymer has a characteristic of high strength and high toughness, therefore, it may reduce phenomenon such as fracture caused by pressing when being pressed.

The insulating polymer includes but is not limited to: polyethylene (PE) or polypropylene (PP).

PP and PE are polymers mature in technology with low cost and high stability.

In some embodiments, an aperture of the hole is between 0.05µm and 8µm.

On the one hand, the aperture cannot have a negative effect on ion migration, and on the other hand, it may well bind a particle composed of the active substance.

Further, the aperture may be between 0.1µm and 5µm.

In some embodiments, a thickness of the insulating protective layer 13 is between 1µm and 10µm.

The thickness of the insulating protective layer 13 (in some places, it may be referred to as a protective film for short) is between 1µm and 10µm, so it has little influence on an overall thickness of the electrode sheet and has little influence on a thickness of the battery assembled by the electrode sheet. At the same time, a thickness of the insulating protective layer 13 composed of the insulating polymer is between 1µm and 10µm, which may ensure sufficient strength and toughness.

In some embodiments, referring to FIG. 2, a membrane layer 12 includes: a first membrane layer 121 and a second membrane layer 122; the first membrane layer 121 and the second membrane layer 122 are located on an opposite side of a current collector;
an insulating protective layer 13 includes:
a first insulating protective layer 131 covering the first membrane layer 121; and
a second insulating protective layer 132 covering the second membrane layer 122.

That is, the membrane layer 12 includes:
a first membrane layer 121 being located on a first surface of the current collector 11;
a second membrane layer 122 being located on a second surface of the current collector 11, where the second surface is an opposite side of the first surface;
the insulating protective layer 13 includes:
   a first insulating protective layer 131 covering the first membrane layer 121; and
   a second insulating protective layer 132 covering the second membrane layer 122.

If both upper and lower surfaces (that is, the first surface and the second surface) of the current collector 11 have the active substance, the corresponding insulating protective layer 13 also has an insulating protective layer 13 covering the upper and lower surfaces of the current collector 11 respectively, they are the first membrane layer 121 and the second membrane layer 122 respectively.

The technical solution provided by an embodiment of the present application has the following characteristics:
(1) A protective layer of insulation (that is, an insulating protective layer) is cladded on a surface of an electrode sheet of a battery.
(2) The insulating protective layer selects a thickness between 1µm and 10µm, and the insulating protective layer may include: being composed of a thin film of a polymer material with an aperture between 0.1µm and 5µm.

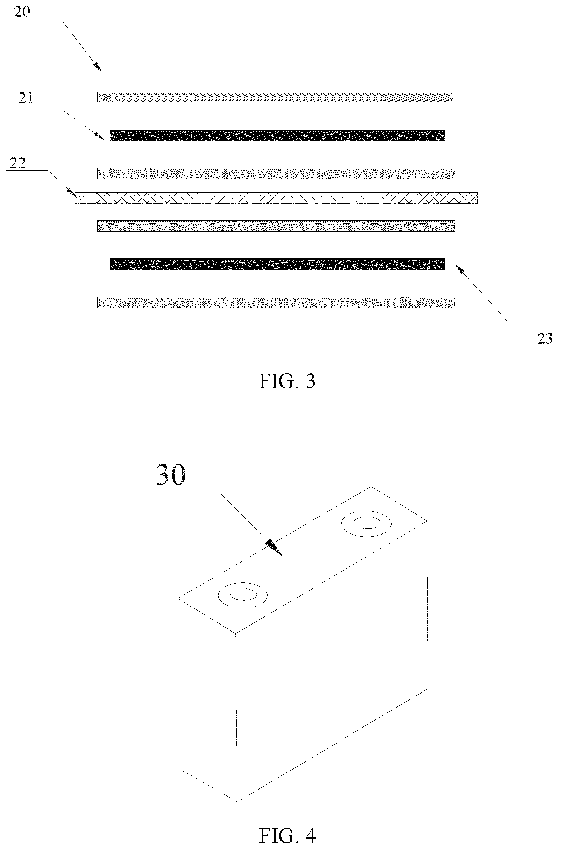

As shown in FIG. 3, an embodiment of the present application provides an electrode assembly 20, including:
the electrode sheet as provided by any of the preceding technical solutions.

The electrode assembly may include: a positive electrode sheet and a negative electrode sheet, and at least one of the positive electrode sheet and the negative electrode sheet is the electrode sheet provided by any of the preceding technical solutions. The electrode sheet in the preceding technical solution includes an insulating protective layer that prevents a separation of a particle of an active substance, and plays a role of dust prevention and separation for a smooth surface, so as to reduce battery insulation failure and self-discharge phenomenon, and has a characteristic that it is easy to clean at the same time.

In some embodiments, as shown in FIG. 3, the electrode sheet includes:
a positive electrode sheet 21;
a negative electrode sheet 22; and
a separator layer 23 being provided between the positive electrode sheet 21 and the negative electrode sheet 22.

That is, an electrode sheet assembly 2 further includes:
the separator layer 23, being located between the positive electrode sheet 21 and the negative electrode sheet 22, and is provided in a laminated way with the positive electrode sheet 21 and the negative electrode sheet 22.

The separator layer 23, being located between the positive electrode sheet 21 and the negative electrode sheet 22, and may separate electron migration between active substances relative to an insulating protective layer.

A density of the separator layer 23 is less than a density of the insulating protective layer; and/or a thickness of a separator is greater than a thickness of the insulating protective layer, and an aperture of a hole for an ion on the separator layer 23 is greater than an aperture of a hole on the insulating protective layer, so that the electron cannot migrate in this large aperture, and the ion may migrate smoothly.

A material of the separator layer 23 may also be PP or PE.

An electrode assembly may be a coiled assembly or a laminated assembly.

In an embodiment of the present disclosure, the membrane layers of the positive electrode sheet 21 and the negative electrode sheet 22 are provided opposite to each other. If the positive electrode sheet 21 and the negative electrode sheet 22 in an embodiment of the present application are both the electrode sheets containing the insulating protective layer in the preceding embodiments, the insulating protective layers of the positive electrode sheet 21 and the negative electrode sheet 22 are provided opposite to each other. An electrode assembly includes: N positive electrode sheet(s) 21 and N negative electrode sheet(s) 22. N is any positive integer. If N is a positive integer greater than or equal to 2, the positive electrode sheet 21 and the negative electrode sheet 22 are provided crossly and in a laminated way.

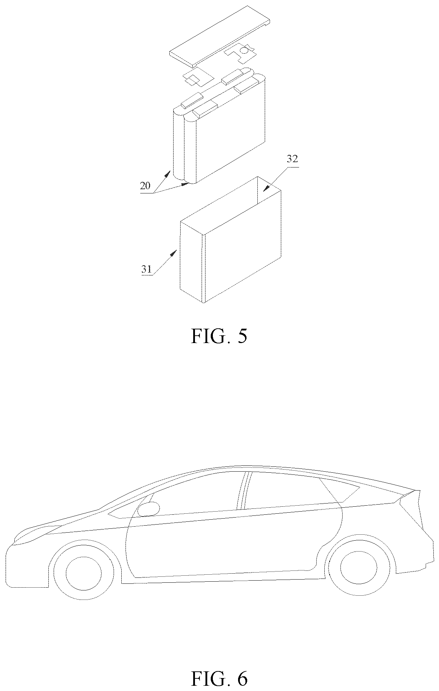

As shown in FIG. 4 and FIG. 5, an embodiment of the present application provides an battery cell, including:
a housing 31, having an accommodating cavity 32; and
an electrode assembly 20 provided by any of the preceding embodiments, and the electrode assembly 20 is located in the accommodating cavity 32.

The battery cell may include one or more electrode assemblies 20 provided by any of the preceding embodiments. These electrode assemblies 20 are located in an accommodating cavity 32 formed by surrounding of the housing 31.

The battery cell may include one or more electrode assemblies 20.

After placing the electrode assembly 20 in the accommodating cavity 32, electrolyte is injected into the accommodating cavity 32.

After injecting the electrolyte, an opening provided for injecting the electrolyte shall be sealed, so that the electrode assembly 20 and the electrolyte may be charged and discharged in a sealed space.

An electrolyte plays the role of conducting ions between a positive electrode sheet and a negative electrode sheet. The type of the electrolyte is not specifically limited in the present application, and may be selected according to needs. For example, the electrolyte may be liquid, gel or all solid.

In some embodiments, the electrolyte adopts an electrolytic solution. The electrolytic solution includes an electrolyte salt and a solvent.

In some embodiments, the electrolyte salt may include but is not limited to at least one of: lithium hexafluorophosphate, lithium tetrafluoroborate, lithium perchlorate, lithium hexafluorarsenate, lithium bisfluorosulfonimide, lithium bistrifluoromethanesulfonimidate, lithium trifluoromethanesulfonate, lithium difluorophosphate, lithium difluorooxalateborate, lithium bisoxalateborate, lithium difluorobisoxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone and diethyl sulfone.

In some embodiments, the electrolytic solution further optionally includes an additive. For example, the additive may include a negative electrode film-forming additive, or a positive electrode film-forming additive, or may further include an additive that may improve specific performance of the battery, such as, an additive for improving overcharge performance of the battery, or an additive for improving high-temperature performance or low-temperature performance of the battery.

The electrode assembly 20 may be in a shape of a cylinder or a cuboid. That is, a housing 3141 may be a cylindrical housing 31 or a rectangular housing 31.

The battery cell may also include: a positive terminal and a negative terminal, the positive terminal is electrically coupled to a tab, and a negative tab is coupled to the negative terminal. The positive terminal and the negative terminal are located at different positions of the battery cell. It is convenient to make an electrical module respectively be coupled to the positive terminal and the negative terminal.

An embodiment of the present disclosure provides a battery, including:
a box body; and
the battery cell provided by any of the preceding embodiments, and the battery cell being accommodated in the box body.

The battery cell includes the preceding electrode sheet cell, and the battery includes one or more battery cells.

The battery cell composing the battery uses the electrode sheet provided by an embodiment of the present disclosure, so that there are less phenomenon of drops of a particle with the active substance and a metal grit doped in the active substance, and it is easy to clean and the cleaning cost is low.

The box body includes an upper box body and a lower box body, the upper box body may be provided covering the lower box body, and form an enclosed space for accommodating one or more battery cells. A plurality of battery cells may be arranged in a battery box in any manner.

The battery provided by an embodiment of the present disclosure may be a secondary battery, and the secondary battery may be charged and discharged circularly.

An embodiment of the present disclosure further provides a power consumption device, including:
the battery provided by any of the preceding technical solutions; and
a power consuming assembly, the power consuming assembly being electrically coupled to the battery.

The power consumption device includes but is not limited to: an electric transportation, an electric smart home device and/or an electric smart office device and/or a mobile terminal.

The electric transportation includes but is not limited to: an electric vehicle, an electric motorcycle, an electric balance vehicle or an electric unicycle and the like that is not directly coupled to a mains power supply line. For example, the electric vehicle may also be divided into: a pure electric vehicle, a hybrid electric vehicle, a plug-in hybrid electric vehicle, an electric bicycle, an electric scooter, an electric golf cart, an electric truck and the like

FIG. 6 shows an electric vehicle containing a battery.

The battery is electrically coupled to a power consuming assembly, so that it may supply power to the power consuming assembly.

An electric smart home device includes, but is not limited to: a ground cleaning robot or a loading automatic robot. The loading automatic robot includes, but is not limited to, a mobile vending machine or a carrier.

The power consuming assembly includes, but is not limited to, an engine of an electrically charged vehicle.

A power consumption device may be a mobile phone, a laptop and the like.

In some embodiments, the power consumption device may also be: an electric train, a ship and satellite, an energy storage system and the like, but is not limited to this.

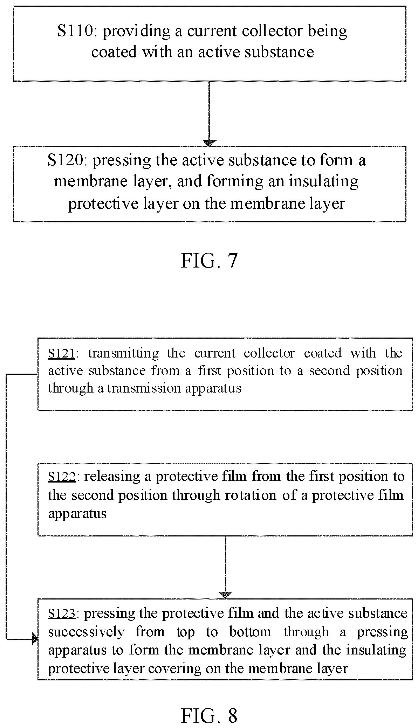

As shown in FIG. 7, an embodiment of the present disclosure provides a method for producing an electrode sheet, including:
S 110: providing a current collector being coated with an active substance; and
S 120: pressing the active substance to form a membrane layer, and forming an insulating protective layer on the membrane layer, where the insulating protective layer has a hole for ion migration in the active substance and preventing a separation of the active substance.

After obtaining the produced current collector, the active substance is coated at a place where the membrane layer needs to be formed, for example, a spin coating machine is used for coating the active substance in an area where the active substance needs to be coated, and a rotation force of the spin coating machine is used for flattening the active substance everywhere, of course, this is only an example, and there are many specific implementation manners, which is not limited to these examples.

After completing the coating of the active substance, it is cooled to normal temperature, and the active substance needs to be compacted to form a dense membrane layer.

In an embodiment of the present application, not only the membrane layer may be formed, but also the insulating protective layer directly covering the membrane layer may be formed. The insulating protective layer is directly in contact with the membrane layer, and no other substances may be provided between the insulating protective layer and the membrane layer.

The insulating protective layer has a hole (micro pore), the hole may allow lithium ion migration and prevent drop of a particle of the active substance, and based on a smooth surface of the insulating protective layer, it may play a role of separating dust (metal dust), thereby protecting the membrane layer more comprehensively, reducing a risk of battery insulation failure and self-discharge by the protecting the membrane layer, and reducing the cleaning cost.

In some embodiments, the pressing the active substance to form a membrane layer, and forming an insulating protective layer on the membrane layer includes:
placing the current collector coated with the active substance between protective films, and pressing the protective films and the active substance to synchronously form the membrane layer and the insulating protective layer.

In the embodiments of the present disclosure, the insulating protective layer is formed by a protective film, and the protective film is synchronously pressed onto the membrane layer formed by the active substance during the process of pressing the active substance. Therefore, no additional procedure is not introduced in the process of introducing the insulating protective layer on the electrode sheet, which has a characteristic that it has a strong compatibility with the producing process of the relevant electrode sheet.

In some embodiments, as shown in FIG. 8, S 120 may include:
S121: transmitting the current collector coated with the active substance from a first position to a second position by a transmission apparatus;
S122: releasing a protective film from the first position to the second position by a protective film apparatus; and
S123: pressing the protective film and the active substance successively from top to bottom by a pressing apparatus to form the membrane layer and the insulating protective layer covering on the membrane layer.

Here, the first position and the second position are on a same plane or on a same straight line. On the basis of rotation of a cross roller, the current collector coated with the active substance may be moved from the first position to the second position, and the second position is different from the first position. In the process of movement, the current collector coated with the active substance may pass the position of a pressing roller, and the pressing roller may compact the active substance through its own gravity and rotation, thereby forming a dense membrane layer.

The transmission apparatus herein may include: a transmission chain or a transmission belt and other transfer structures capable of transferring an item coated with the active substance.

In an embodiment of the present disclosure, in addition, a wrapped protective film is released from the first position to the second position by the protective film apparatus, and the protective film is located between the active substance to be compacted and the pressing roller. Therefore, when the pressing apparatus is pressed, the pressure from top to bottom may first act on the protective film and then act on the active substance, thereby achieving the compaction of the active substance and the pressing of the insulating protective layer simultaneously by one pressing, which has a characteristic of simple process.

In an embodiment of the present disclosure, the pressing apparatus may be various mechanisms that may press the current collector coated with the active substance and the protective film.

In some embodiments, both a first surface and a second surface of the current collector are coated with the active substance;

the transmission apparatus includes: a first cross roller and a second cross roller, the first cross roller provides the current collector coated with the active substance moving from the first position to the second position, and the second cross roller provides a force to push the current collector coated with the active substance to move from the first position to the second position.
and/or,
the pressing apparatus includes: a first pressing roller and a second pressing roller; the second pressing roller is located below the first pressing roller and has a gap with the first pressing roller; and
the current collector coated with the active substance passes through the gap between the first pressing roller and the second pressing roller under a traction of the first pressing roller and a push of the second pressing roller;
   and/or,
the protective film apparatus includes: a first unwinding mechanism and a second unwinding mechanism; the first unwinding mechanism is located above the first cross roller and the second cross roller, and the second unwinding mechanism is located below the first cross roller and the second cross roller;
the first unwinding mechanism is used for unwinding a first insulating protective layer of a first membrane layer formed by an active substance covering a first surface of the current collector; and the first insulating protective layer passes between the current collector coated with the active substance and the first pressing roller and is pressed; and
the second unwinding mechanism is used for unwinding a second insulating protective layer of a second membrane layer formed by the active substance covering a second surface of the current collector; and the second insulating protective layer passes through between the current collector coated with the active substance and the second pressing roller and is pressed.

When upper and lower surfaces of the current collector have the active substance to be compacted, the pressing roller may include upper and lower pressing rollers, and the unwinding roller also includes unwinding a protective film forming the first protective layer and unwinding a protective film forming the second protective layer.

In some embodiments, the method further includes:
cutting the current collector formed by pressing and having the insulating protective layer and the membrane layer to obtain the electrode sheet; and
cleaning a surface of the insulating protective layer by negative pressure during cutting.

After completing the pressing, it is necessary to cut to form the electrode sheet with a required size.

During cutting, a vibration force that makes the active substance separate may be generated, and then dust will be generated. These dusts may be separated outside the membrane layer by the insulating protective film, since the insulating protective layer is a component part of the electrode sheet, it also needs to be cleaned. Therefore, the surface of the insulating protective layer may also be cleaned by negative pressure during cutting, so that the hole on the surface of the insulating protective layer may not be blocked, and at the same time, it may also make the electrode sheet cleaner as a whole and reduce various problems caused by uncleanness of the electrode sheet.

In one embodiment, the method further includes:
By adjusting the pressure of the pressing roller, a tightness of adhesion between the insulating protective layer and the membrane layer is controlled.

In short, an embodiment of the present application provides a method for producing the electrode sheet, and a thin film is pressed and cladded on the surface of the electrode sheet synchronously during a rolling process of the electrode sheet of a cold pressing procedure.

The electrode sheet and the insulating protective layer are pressed under a certain pressure.

The insulating protective layer is formed by cladding a surface of a battery core electrode sheet, and the insulating protective layer may prevent a material dropping onto the membrane layer itself that is, the active substance and separate contamination of a metal grit on the surface of the membrane layer.

The insulating protective layer is formed by a selected polymer material with an aperture between 0.1µm to 5µm, after pressing, it may not affect the chemical and electrical properties of the battery cell.

In the cold pressing procedure, the protective film is pressed and cladded on the surface of the electrode sheet synchronously during the rolling process of the electrode sheet, without adding additional device and procedure. The protective film is a thin film.

The protective film with an appropriate thickness is recombined with a roughness of the surface of the electrode sheet, so that a thickness of the entire electrode sheet does not change significantly after pressing under certain pressure.

The technical solution of cladding the surface of the electrode sheet with the insulating protective layer contains a pressing roller and a pressure condition mechanism, a protective film, an electrode sheet, a protective film unwinding and a tension adjustment apparatus and the like.

The pressed electrode sheet includes upper and lower insulating protective layers, upper and lower membrane layers and the current collector. The apparatus synchronously presses the membrane layer and the insulating protective layer in the processing procedure of the electrode sheet.

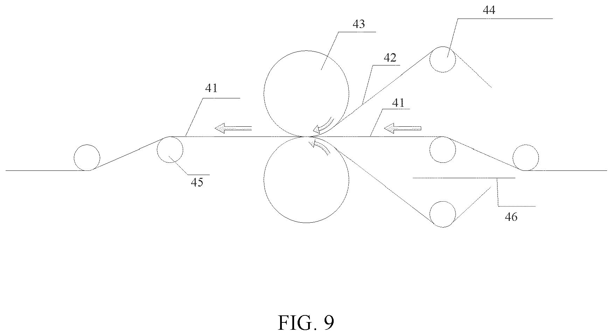

As shown in FIG. 9, an embodiment of the present disclosure provides a system for producing an electrode sheet, including:
a transmission apparatus 45, the transmission apparatus 45 being used for moving a current collector 41 coated with an active substance from a first position to a second position;
a protective film apparatus 44, the protective film apparatus 44 being used for unwinding a protective film 42 forming an insulating protective layer;
a pressing apparatus 43, the pressing apparatus 43 being used for pressing the protective film and the active substance from top to bottom to form a membrane layer and an insulating protective layer covering on the membrane layer respectively; and where the insulating protective layer has a hole for ion migration in the active substance and preventing a separation of the active substance.

The system for producing an electrode sheet may be used for producing the electrode sheet.

A protective film apparatus is introduced into the system for producing an electrode sheet, and the protective film apparatus may unwind the protective film from the first position to the second position. Exemplarily, the protective film apparatus may at least include an unwinding roller, and the unwinding roller is installed with a protective film roll, the unwinding roller may unfold the protective film on the protective film roll by its own rotation, and move with the current collector coated with the active substance, and when the active substance is compacted, press the protective film onto the active substance synchronously, and form the membrane layer and the insulating protective film covered by the membrane layer.

The unwinding roller is a protective film unwinding mechanism, which is used for unfolding a wrapped protective film from the protective film roll. In other embodiments, the protective film apparatus further includes: a tension adjusting mechanism, which is used for adjusting released tension of the protective film, and the protective film is kept flat and unfolded by proper tension without damage due to excessive tension.

The insulating protective film has a micro hole, an aperture of the micro hole allows an ion (for example, a lithium ion or a sodium ion) to pass through and prevents drop of a particle of the active substance, so that the introduction of the insulating protective layer may better protect the membrane layer and do not hinder the realization of the normal function of charging and discharging of the electrode sheet.

In some embodiments, both a first surface and a second surface of the current collector are coated with the active substance;
and the transmission apparatus includes: a first cross roller and a second cross roller, the first cross roller provides the current collector coated with the active substance moving from the first position to the second position, and the second cross roller provides a force to push the current collector coated with the active substance to move from the first position to the second position.
   and/or,
the pressing apparatus includes: a first pressing roller and a second pressing roller; the second pressing roller is located below the first pressing roller and has a gap with the first pressing roller; and
the current collector coated with the active substance passes through the gap between the first pressing roller and the second pressing roller under a traction of the first pressing roller and a push of the second pressing roller;
   and/or,
the protective film apparatus includes: first unwinding mechanism and a second unwinding mechanism; the first unwinding mechanism is located above the first cross roller and the second cross roller, and the second unwinding mechanism is located below the first cross roller and the second cross roller;
the first unwinding mechanism is used for unwinding a first protective film of a first membrane layer formed by an active substance covering a first surface of the current collector; and the first protective film passes between the current collector coated with the active substance and the first pressing roller and is pressed; and
the second unwinding mechanism is used for unwinding a second protective film of a second membrane layer formed by an active substance covering a second surface of the current collector; and the second protective film passes between the current collector coated with the active substance and the second pressing roller and is pressed.

Such a production system of two unwinding rollers may be used for the production of the membrane layer of the current collector with the active substances on both upper and lower surfaces and the pressing of the insulating protective film.

Such an electrode sheet with membrane layers providing on both upper and lower surfaces has a characteristic of strong charge and discharge capacity.

In some embodiments, the system further includes:
a separator plate 46, the separator plate 46 is located between the second unwinding mechanism and the first cross roller, and is used for preventing a protective film on the second unwinding mechanism from contamination.

The second unwinding mechanism is located below the first cross roller and the second cross roller, when the current collector coated with the active substance moves on the first cross roller and second cross roller, the active substance has not been pressed, and there is a risk of a separation of the particle of the active substance. Moreover, the vibration of a mechanical device during production will cause dust separation, and the relatively large dust may fall down, and these dust may be caught by the separator plate, so as to protect the protective film on the second unwinding mechanism from contamination or make it have less contamination.

In some embodiments, the system further includes:
a cutting apparatus, the cutting apparatus is used for cutting the current collector formed by pressing and having the insulating protective layer and the membrane layer to obtain the electrode sheet; and
a dust suction apparatus, the dust suction apparatus is used for generating negative pressure absorbing dust on the insulating protective layer when the cutting apparatus is cutting.

The cutting apparatus may perform a current collector pressed with the insulating protective layer and the membrane layer according to a required size of the electrode sheet, so as to obtain the electrode sheet.

During cutting, the dust suction apparatus is further needed to generate negative pressure to clear the dust falling on the insulating protective layer, so as to realize the cleaning of the surface of the insulating protective layer.

The dust suction apparatus is located around the cutting apparatus, for example, being located above or below or on a side of the cutting apparatus, which may absorb the dust at different positions to achieve the purpose of cleaning.

The upper protective film mechanism is located above the electrode sheet, and unwinding and tension adjustment mechanisms make the protective film and the electrode sheet enter a pressing mechanism synchronously, so as to make the protective film layer have a certain tension, and the surface is flat and smooth without wrinkles at the same time.

The lower protective film mechanism is located below the electrode sheet, and a protective partition is provided between the electrode sheet and the protective film to prevent a protective film from contamination, and the unwinding and tension adjustment mechanisms make the protective film and the electrode sheet enter the pressing mechanism synchronously, so as to make the protective film layer have a certain tension, and the surface is flat and smooth without wrinkles at the same time.

After the upper and lower protective films and the electrode sheet coated with the active substance passing through the pressing roller, the membrane layer formed by pressing of the active substance under certain pressure and the insulating protective layer formed by pressing of the protective film are recombined together.

The insulating protective layer and the electrode sheet are tightly bonded and cannot be isolated during the producing process, and a thickness of the cladded electrode sheet formed by pressing may meet the design requirements.

The protective film apparatus is located before the electrode sheet pressing, and is integrated in a pressing apparatus.

In the protective film apparatus, the upper and lower protective films operate synchronously with the electrode sheet.

In the protective film apparatus, the upper protective film mechanism enables the protective film to enter the pressing mechanism synchronously with the electrode sheet above the electrode sheet.

In the protective film apparatus, the unwinding and tension mechanisms make the surface of the protective film flat and smooth without wrinkles.

Cladding the upper film mechanism on the protective film apparatus enables the protective film to enter the pressing mechanism synchronously with the electrode sheet below the electrode sheet.

In the protective film apparatus, a protective partition is provided between the electrode sheet and the protective film to prevent the protective film from contamination.

In the protective film apparatus, the upper and lower protective films and the electrode sheet form the insulating protective layer of the membrane layer cladding the electrode sheet after passing the pressing roller.

In the protective film apparatus, the insulating protective layer and the membrane layer of the electrode sheet are adjusted to be tightly bonded by the pressure of the pressing roller, and a thickness of the cladded electrode sheet meets the design requirements.

The protective film apparatus herein may at least include the unwinding roller.

It should be noted that the present application is not limited to the foregoing embodiments. The foregoing embodiments are merely examples, and embodiments having substantially the same constitution as the technical idea and exerting the same effects within the technical solution of the present application are all included within the technical scope of the present application. In addition, various modifications may be made to the embodiments by persons skilled in the art without departing from the spirit and scope of the present application, and other embodiments that are constructed by combining some of the constituent elements of the embodiments are also included in the scope of the present application.

## Claims

1. An electrode sheet, comprising:
a current collector;
a membrane layer, comprising an active substance; and
an insulating protective layer, the insulating protective layer covering on the membrane layer, wherein the insulating protective layer comprises a hole for ion migration in the active substance and preventing a separation of the active substance.

2. The electrode sheet according to claim 1, wherein the insulating protective layer comprises a polymer.

3. The electrode sheet according to claim 1 or 2, wherein an aperture of the hole is between 0.05µm and 8µm.

4. The electrode sheet according to any one of claims 1-3, wherein a thickness of the insulating protective layer is between 1µm and 10µm.

5. The electrode sheet according to any one of claims 1-4, wherein
the membrane layer comprises: a first membrane layer and a second membrane layer;
the first membrane layer and the second membrane layer are located on opposite sides of the current collector;
the insulating protective layer comprises:
a first insulating protective layer covering the first membrane layer; and
a second insulating protective layer covering the second membrane layer.

6. An electrode assembly, comprising: the electrode sheet being provided by any one of claims 1-5.

7. The electrode assembly according to claim 6, wherein the electrode sheet comprises:
a positive electrode sheet;
a negative electrode sheet; and
a separator layer being provided between the positive electrode sheet and the negative electrode sheet.

8. A battery cell, comprising:
a housing, the housing comprising an accommodating cavity; and
the electrode assembly according to claim 6 or 7, and the electrode assembly being located in the accommodating cavity.

9. A battery, comprising:
a box body; and
the battery cell according to claim 8, and the battery cell being accommodated in the box body.

10. A power consumption device, comprising:
the battery according to claim 9; and
a power consuming assembly, the power consuming assembly being electrically coupled to the battery.

11. A method for producing an electrode sheet, comprising:
providing a current collector being coated with an active substance; and
pressing the active substance to form a membrane layer, and forming an insulating protective layer on the membrane layer, wherein the insulating protective layer has a hole for ion migration in the active substance and preventing a separation of the active substance.

12. The method according to claim 11, wherein the pressing the active substance to form a membrane layer, and forming an insulating protective layer on the membrane layer comprises:
placing the current collector coated with the active substance between protective films, and pressing the protective films and the active substance to synchronously form the membrane layer and the insulating protective layer.

13. The method according to claim 11 or 12, wherein the placing the current collector coated with the active substance between protective films, and pressing the protective films and the active substance to synchronously form the membrane layer and the insulating protective layer comprises:
transmitting the current collector coated with the active substance from a first position to a second position by a transmission apparatus;
releasing a protective film from the first position to the second position by a protective film apparatus; and
pressing the protective film and the active substance successively from top to bottom by a pressing apparatus to form the membrane layer and the insulating protective layer covering on the membrane layer.

14. The method according to claim 13, wherein both a first surface and a second surface of the current collector are coated with the active substance; and
the transmission apparatus comprises: a first cross roller and a second cross roller, the first cross roller provides the current collector coated with the active substance moving from the first position to the second position, and the second cross roller provides a force to push the current collector coated with the active substance to move from the first position to the second position.

15. The method according to claim 13 or 14, wherein
the pressing apparatus comprises: a first pressing roller and a second pressing roller;
the second pressing roller is located below the first pressing roller and has a gap with the first pressing roller; and
the current collector coated with the active substance passes through the gap between the first pressing roller and the second pressing roller under a traction of the first pressing roller and a push of the second pressing roller.

16. The method according to any one of claims 13-15, wherein
the protective film apparatus comprises: a first unwinding mechanism and a second unwinding mechanism; the first unwinding mechanism is located above the first cross roller and the second cross roller, and the second unwinding mechanism is located below the first cross roller and the second cross roller;
the first unwinding mechanism is used for unwinding a first protective film of a first membrane layer formed by an active substance covering a first surface of the current collector; and the first protective film passes between the current collector coated with the active substance and the first pressing roller and is pressed; and
the second unwinding mechanism is used for unwinding a second protective film of a second membrane layer formed by an active substance covering a second surface of the current collector; and the second protective film passes between the current collector coated with the active substance and the second pressing roller and is pressed.

17. The method according to any one of claims 11-16, wherein the method further comprises:
cutting the current collector formed by pressing and having the insulating protective layer and the membrane layer to obtain the electrode sheet; and
cleaning a surface of the insulating protective layer by negative pressure during cutting.

18. A system for producing an electrode sheet, comprising:
a transmission apparatus, the transmission apparatus being used for moving a current collector coated with an active substance from a first position to a second position;
a protective film apparatus, the protective film apparatus being used for unwinding a protective film forming an insulating protective layer; and
a pressing apparatus, the pressing apparatus being used for pressing the protective film and the active substance from top to bottom to form a membrane layer and an insulating protective layer covering on the membrane layer respectively; and wherein the insulating protective layer has a hole for ion migration in the active substance and preventing a separation of the active substance.

19. The system according to claim 18, wherein both a first surface and a second surface of the current collector are coated with the active substance; and
the transmission apparatus comprises: a first cross roller and a second cross roller, the first cross roller provides the current collector coated with the active substance moving from the first position to the second position, and the second cross roller provides a force to push the current collector coated with the active substance to move from the first position to the second position.

20. The system according to claim 18 or 19, wherein
the pressing apparatus comprises: a first pressing roller and a second pressing roller;
the second pressing roller is located below the first pressing roller and has a gap with the first pressing roll; and
the current collector coated with the active substance passes through the gap between the first pressing roller and the second pressing roller under a traction of the first pressing roller and a push of the second pressing roller.

21. The system according to any one of claims 18-20, wherein
the protective film apparatus comprises: a first unwinding mechanism and a second unwinding mechanism; the first unwinding mechanism is located above the first cross roller and the second cross roller, and the second unwinding mechanism is located below the first cross roller and the second cross roller;
the first unwinding mechanism is used for unwinding a first protective film of a first membrane layer formed by an active substance covering a first surface of the current collector; and the first protective film passes between the current collector coated with the active substance and the first pressing roller and is pressed; and
the second unwinding mechanism is used for unwinding a second protective film of a second membrane layer formed by an active substance covering a second surface of the current collector; and the second protective film passes between the current collector coated with the active substance and the second pressing roller and is pressed.

22. The system according to claim 21, wherein the system further comprises:
a separator plate, the separator plate is located between the second unwinding mechanism and the first cross roller, and is used for preventing a protective film on the second unwinding mechanism from being contaminated.

23. The system according to any one of claims 18-22, wherein the system further comprises:
a cutting apparatus, the cutting apparatus is used for cutting the current collector formed by pressing and having the insulating protective layer and the membrane layer to obtain the electrode sheet; and
a dust suction apparatus, the dust suction apparatus is used for generating negative pressure absorbing dust on the insulating protective layer when the cutting apparatus is cutting.
